# EUROPEAN PATENT SPECIFICATION

(11) **EP 3 239 565 B1**
(45) Date of publication and mention of the grant of the patent: **12.02.2020**
(21) Application number: 17165222.5
(22) Date of filing: 06.04.2017
(51) Int. Cl.: F16K 1/22, F16K 3/00, F16K 27/07, B60P 1/56, B65D 90/58, B65D 90/62

(54) **COVER STRUCTURE DEVELOPED FOR SILO DISCHARGE VALVES**
FÜR SILOAUSLASSVENTILE ENTWICKELTE ABDECKUNGSSTRUKTUR
STRUCTURE DE COUVERTURE DÉVELOPPÉE POUR DES SOUPAPES DE DÉCHARGE POUR SILO

(30) Priority: 29.04.2016 TR 201605586
(43) Date of publication of application: 01.11.2017
(73) Proprietor: Tirsan Treyler Sanayi Ve Ticaret Anonim Sirketi, 54580 Sakarya (TR)
(72) Inventor: ODABAS , Erhan, Sakarya (TR)
(74) Representative: Yamankaradeniz, Kemal

(56) References cited:
- EP-A2- 1 574 762
- US-A- 3 817 432
- US-A- 3 997 089

## Description

### Technical Field

The invention is related to cover structure developed for silo discharge valves in order to prevent exposure of materials carried with horizontal silo vehicles that transport powdered and granular materials and can make bottom discharge freely, to external ambient conditions such as dust, mud and waste water during discharge.

Particularly, the invention is related to cover structure that prevents adhesion of undesirable substances such as dust, mud and waste water to valve flap that enables opening and closing of the discharge valve of silo vehicles, and thus prevents contamination of these substances to materials within the tank.

### Known State of the Technique

Nowadays, various materials can be transported to the intended points with vehicles via highways. For this, materials are carried with trailers constituting silo body where various materials assembled on the back part of vehicles can be transported, or via on-truck applications and this carrying operation ends when the indented point is reached.

Following the carrying operation, materials in silo are discharged via free discharge valves to the intended area. At this discharge phase, dusts and granular materials that remain in the silo trailer for a while are taken out from these systems via gravity or another driving force. To enable this operation, there are outlets available on each of these systems.

In the existing technique, there are free discharge valves on outlets of silos. There are on/off handle (actuator), enabling opening and closing of the valve, and valve flap on free discharge valve which allows for the exit of products in the tank. During discharge, free discharge valves are opened by means of an actuator and the flap is set to vertical position. After the materials in the tanks are discharged, the mentioned valve is closed again by means of the actuator and the flap is set to horizontal position at the same time.

When the vehicle is moving, undesirable substances such as dust, mud and waste water adhere to valve flap and during the discharge, these substances are mixed with materials in the tank due to vertical position of the flap. Therefore, undesirable substances not only harm the material transported in tank but also shorten useful life of discharge valve.

In the known state of technique, there are applications related to discharge lines developed for silos. One of these applications is utility model application numbered TR2007/02301. The invention is related to material flow valve that enables bulk materials (dust, granular substance and part mass) in silos, silo trailers or tanks to move towards outlet on the mentioned reservoirs by the help of a certain air flow, and allows for easier exit from this outlet.

Another application is utility model application numbered TR2008/06853. The application is related to the improvements made for transportation silos used in carrying powdered and granular materials or products such as cement, sodium carbonate, ash, calcite and sugar via highway, by railway or sea. In transportation silo, which is the subject of the invention, the resistance of leaf flap that formerly occurred due to the use of leaf valve is prevented by means of a ball valve. Therefore, a healthier and faster flow of transported material is ensured.

Developments with regards to healthier and faster discharge of transported materials were mentioned in the relevant applications; however, contact of undesirable substances during transportation with valve flaps used on discharge line could not be prevented.

Another application is a patent application numbered US3997089 (A). The application is related to a discharge gate assembly for sealing and controlling the flow of particulate material from a discharge opening in a hopper of the type used on semi-trailers, railroad cars or storage bins is disclosed wherein the discharge gate assembly comprises a frame which is secured over the discharge opening and has a discharge passageway through which particulate material can fall when the hopper is being emptied, a valve means in the discharge passageway to regulate the flow of material through the discharge passageway, a seal between the frame and hopper to prevent contamination from entering the discharge opening and hopper, and a cover means for sealing the lower end of the discharge passageway to prevent entry of any contaminants. In this application, the cover is connected to the assembly by clamps. At the time of discharge operation, user must open the clamps at first, then open the valve, therefore the discharge gate assembly causes workload and time loss.

In consequence, due to the unfavorable situations and deficiencies above, the need of making innovation in the relevant technical field has emerged.

### The Purpose of the Invention

The present invention is about the cover structure developed for silo discharge valves that fulfills the requirements mentioned above, eliminates all disadvantages and brings additional advantages.

The purpose of the invention is to prevent adhesion of undesirable substances such as dust, mud and waste water to valve flap while the vehicle is on the move.

Another purpose of the invention is to prevent the contamination of undesirable substances, which may have adhered onto valve flap, to the materials in the tank during discharge of transported materials.

Through the cover structure developed, the purpose of the invention is to prolong useful life of discharge valve by protecting it from undesirable substances such as mud, dust and waste water adhering to the cover.
Another purpose of the invention is to enable side opening of the cover since the discharge reservoir is very close to the discharge valve due to its height. In this way, slamming of the cover to the discharge reservoir is prevented.

Another purpose of the invention is to eliminate the requirement of a second task for the user besides opening/closing the valve, by enabling synchronous operation of cover structure and valve.

In order to meet the intentions above, the invention is related to a cover structure for silo vehicles carrying powdered and granular materials on highways, preventing adhesion of undesirable substances such as dust, mud and waste water to a discharge valve and thus preventing contamination of such substances to the materials in the tank, the cover structure having a discharge valve comprising a valve flap, and an actuator enabling opening/closing of the discharge valve. The cover structure further comprises
- a protective cover located under the discharge valve,
- a drive transmitter connected to the actuator that transmitting the required driving power by turning of the actuator for synchronous operation of the protective cover and the discharge valve,
- a jointed interconnecting piece that transmits the movement from the drive transmitter to the protective cover to which it is connected,
- a guide plate that guides the horizontal opening and closing of the protective cover on its route, and that is assembled with the discharge valve,
- a flange that ensures the connection of the protective cover and the guide plate.

Structural and characteristic features and all advantages of the invention will be understood more clearly through the detailed explanations provided below; and therefore, it is required to make evaluations by considering these detailed explanations.

### Figures To Facilitate Understanding the Invention

**Figure-1:** View of assembled/disassembled state of discharge valve having protective cover.
**Figure-2:** View of protective cover on discharge valve in close position.
**Figure-3:** View of protective cover on discharge valve in open position.
**Figure-4:** Representational view of opening of protective cover on discharge valve.

The drawings do not have to be scaled necessarily and unnecessary details may be neglected to understand the current invention. Besides, elements which are largely identical or at least with largely identical functions are shown with the same number.

### Explanation of Part References

**1.** Exit cone
**2.** Discharge valve
**3.** Valve flap
**4.** Actuator
**5.** Drive transmitter
**6.** Guide plate
**6.1.** Route
**7.** Flange
**7.1.** Female hinge member
**8.** Protective cover
**8.1.** Male hinge member
**9.** Jointed interconnecting piece
**10.** Connection element
**11.** Connector shell

### Detailed Explanation of the Invention

In this detailed explanation, the cover structure is explained for better understanding of the subject without causing any limiting impact. This cover structure prevents adhesion of undesirable substances such as dust, mud and waste water to valve flap (3) that enables opening/closing of discharge valve (2) in silo vehicles, and thus prevents contamination of such substances to the materials in the tank.

Discharge valves (2) are located on exit cone (1) in silos. A valve flap (3), enabling opening/closing of the valve, and an actuator (4) are available on the discharge valve (2) that allows for the exit of product in tank.

As seen in figure-1, the cover structure which is the subject of the invention is by its nature composed of a protective cover (8) located right under the discharge valve (2), a drive transmitter (5) that provides the necessary driving power for synchronous operation of the mentioned protective cover (8) and the discharge valve (2), a jointed interconnecting piece (9) that transmits the movements from drive transmitter to the protective cover (8), and a guide plate (6) that guides opening/closing of the protective cover (8) on a horizontal axis. The joint used in this jointed interconnecting piece (9) is universal joint.

Connection of the discharge valve (2) with both exit cone (1) and protective cover (8) is ensured by fitting connection elements (10) to connector shells (11) on flange (7) and guide plate (6). A second connection is obtained by intertwining a female hinge member (7.1) located on the flange (7) and a male hinge member (8.1) located on the protective cover (8). The mentioned connection elements (10) are preferably bolts.

In figure-2 and 3, close and open positions of discharge valve (2) on the protective cover (8) are provided, respectively. When the discharge valve (2) is opened by turning with the help of the actuator (4), drive transmitter (5) also starts to open the protective cover (8) in direction A in parallel to the ground on the route (6.1) of guide plate (6), by means of the universal jointed interconnecting piece (9). In the meantime, valve flap (3) which is in parallel to the ground turns and is set in vertical position, and thus, material flow starts from the exit reservoir (1).

Synchronous operation of discharge valve (8) and protective cover (8) occurs in consequence of both elements' receiving the driving power necessary for moving from a single actuator (4). In this way, the need of a second task for the user besides opening/closing the valve is eliminated.

In figure-4, a representational view of opening of protective cover (8) on discharge valve (2) is provided. Thanks to the cover structure which is the subject of the invention, adhesion of undesirable substances such as mud, dust and waste water, resulting from poor road conditions while the vehicle is on the move, to valve flap (3) is avoided, and mixture of such substances with the materials in the tank during discharge is prevented.

Through opening and closing of the protective cover (8) in parallel to the ground in this invention, slamming of the protective cover (8) to discharge reservoir during material discharge is also prevented.

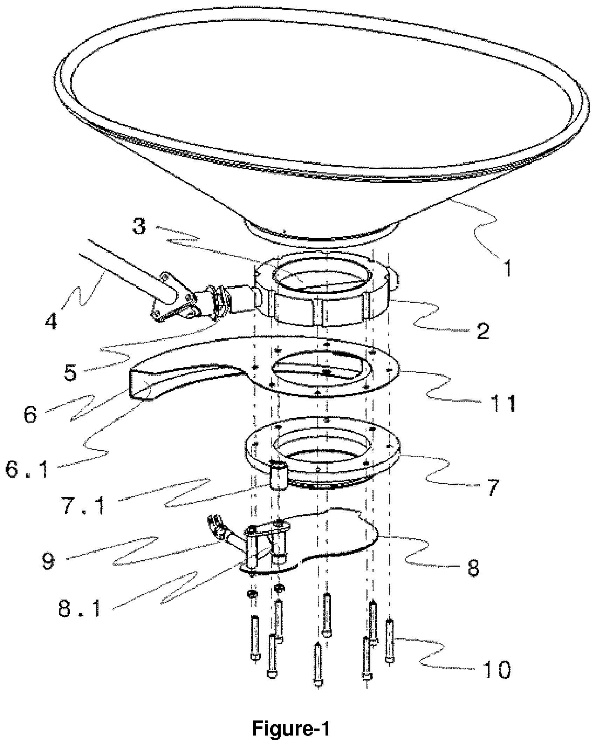

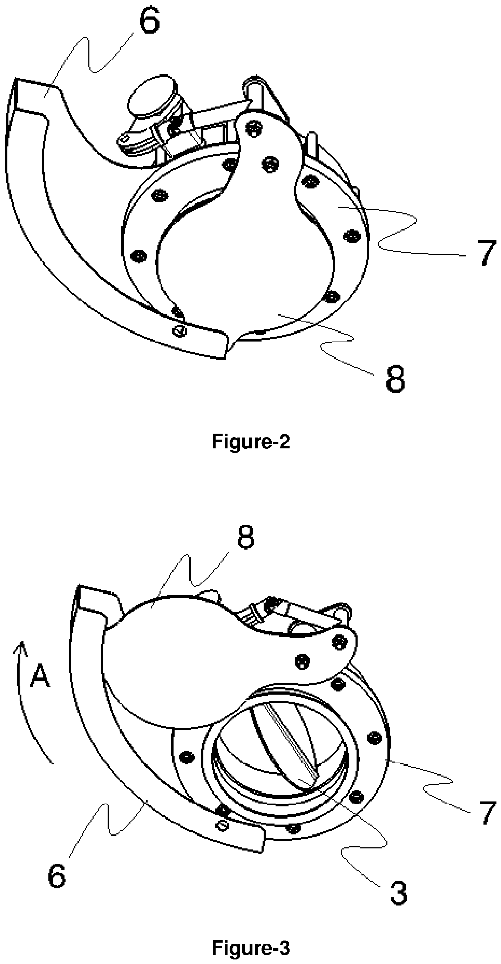

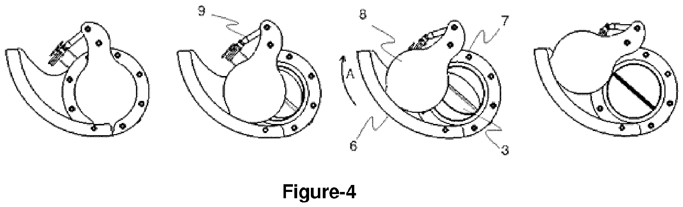

## Claims

1. A cover structure for silo vehicles carrying powdered and granular materials on highways, preventing adhesion of undesirable substances such as dust, mud and waste water to a discharge valve and thus preventing contamination of such substances to the materials in the tank; the cover structure having a discharge valve (2) comprising a valve flap (3) and an actuator (4) enabling opening/closing of the discharge valve (2), the cover structure further comprising
• a protective cover (8) located under the discharge valve (2), **characterised by**
• a drive transmitter (5) connected to actuator (4) transmitting the required driving power by turning of the actuator (4), for synchronous operation of the protective cover (8) and the discharge valve (2),
• a jointed interconnecting piece (9) that transmits the movement from the drive transmitter (5) to the protective cover (8) to which it is connected,
• a guide plate (6) that guides the horizontal opening and closing of the protective cover (8) on its route (6.1), and that is assembled with the discharge valve (2),
• a flange (7) that ensures the connection of the protective cover (8) and the guide plate (6).

2. The cover structure according to Claim 1, further comprising a female hinge member (7.1) located on the flange (7) and a male hinge member (8.1) located on the protective cover (8) in order to ensure the connection of the protective cover (8) and the flange (7).

3. The cover structure according to Claim 1, further comprising several connector shells (11) formed on the flange (7) and the guide plate (6).

4. The cover structure according to Claim 1, further comprising a connection element (10) that ensures the connection of the discharge valve (2) to an exit cone (1) and the protective cover (8).

5. The cover structure according to Claim 4, wherein the connection element (10) is a bolt.

6. The cover structure according to Claim 1, wherein the joint used in the jointed interconnecting piece (9) is a universal joint.

## Patentansprüche

1. Abdeckstruktur für Silofahrzeuge, die pulverförmiges und granulatförmiges Material auf Fernverkehrsstraßen transportieren, wobei die Adhäsion unerwünschter Substanzen, wie etwa von Staub, Schlamm und Schmutzwasser, an einem Ablassventil verhindert wird, und wodurch eine Kontamination des Materials in dem Tank durch derartige Substanzen verhindert wird; wobei die Abdeckstruktur ein Ablassventil (2) aufweist, das eine Ventilklappe (3) und ein Stellglied (4) umfasst, das ein Öffnen und Schließen des Ablassventils (2) ermöglicht, wobei die Abdeckstruktur ferner folgendes umfasst:
• eine Schutzabdeckung (8), die sich unter dem Ablassventil (2) befindet, **gekennzeichnet durch**
• eine Antriebsübertragungseinrichtung (5), die mit dem Stellglied (4) verbunden ist, wobei sie die benötigte Antriebsleistung durch Drehen des Stellglieds (4) für einen synchronen Betrieb der Schutzabdeckung (8) und des Ablassventils (2) überträgt;
• ein verbundenes Zwischenverbindungsstück (9), das die Bewegung der Antriebsübertragungseinrichtung (5) auf die Schutzabdeckung (8) überträgt, mit der sie verbunden ist;
• eine Führungsplatte (6), welche das horizontale Öffnen und Schließen der Schutzabdeckung (8) auf deren Route (6.1) führt, und welche mit dem Ablassventil (2) montiert ist;
• einen Flansch (7), der die Verbindung der Schutzabdeckung (8) und der Führungsplatte (6) gewährleistet.

2. Abdeckstruktur nach Anspruch 1, ferner umfassend ein weibliches Scharnierelement (7.1), das sich an dem Flansch (7) befindet, und ein männliches Scharnierelement (8.1), das sich an der Schutzabdeckung (8) befindet, um die Verbindung der Schutzabdeckung (8) und des Flansches (7) sicherzustellen.

3. Abdeckstruktur nach Anspruch 1, die ferner mehrere Verbinderschalen (11) umfasst, die an dem Flansch (7) und der Führungsplatte (6) ausgebildet sind.

4. Abdeckstruktur nach Anspruch 1, die ferner ein Verbindungselement (10) umfasst, das die Verbindung des Ablassventils (2) mit einem Austrittskegel (1) und der Schutzabdeckung (8) sicherstellt.

5. Abdeckstruktur nach Anspruch 4, wobei das Verbindungselement (10) ein Bolzen ist.

6. Abdeckstruktur nach Anspruch 1, wobei es sich bei der Verbindung in dem verbundenen Zwischenverbindungsstück (9) um eine Universalgelenkverbindung handelt.

## Revendications

1. Structure de couvercle pour véhicules-silo transportant des matériaux pulvérulents et granuleux sur des routes, empêchant l'adhérence de substances indésirables telles que la poussière, la boue et les eaux usées à une soupape de décharge et empêchant ainsi la contamination par ces substances des matériaux dans le réservoir ; la structure de couvercle ayant une soupape de décharge (2) comprenant un volet de soupape (3) et un actionneur (4) permettant l'ouverture/la fermeture de la soupape de décharge (2), la structure de couvercle comprenant en outre
• un couvercle de protection (8) situé sous la soupape de décharge (2), **caractérisé par**
• un transmetteur d'entraînement (5) relié à l'actionneur (4) transmettant la puissance d'entraînement nécessaire par rotation de l'actionneur (4), pour le fonctionnement synchrone du couvercle de protection (8) et de la soupape de décharge (2),
• une pièce d'interconnexion articulée (9) qui transmet le mouvement du transmetteur d'entraînement (5) au couvercle de protection (8) auquel il est relié,
• une plaque de guidage (6) qui guide l'ouverture et la fermeture horizontale du couvercle de protection (8) sur son parcours (6.1), et qui est assemblée avec la soupape de décharge (2),
• une bride (7) qui assure la liaison du couvercle de protection (8) et de la plaque de guidage (6).

2. Structure de couvercle selon la revendication 1, comprenant en outre un élément charnière femelle (7.1) situé sur la bride (7) et un élément charnière mâle (8.1) situé sur le couvercle de protection (8) afin d'assurer la liaison du couvercle de protection (8) et de la bride (7).

3. Structure de couvercle selon la revendication 1, comprenant en outre plusieurs coquilles de connecteur (11) formées sur la bride (7) et la plaque de guidage (6).

4. Structure de couvercle selon la revendication 1, comprenant en outre un élément de liaison (10) qui assure le raccordement de la soupape de décharge (2) à un cône de sortie (1) et au couvercle de protection (8).

5. Structure de couvercle selon la revendication 4, l'élément de liaison (10) étant un boulon.

6. Structure de couvercle selon la revendication 1, le joint utilisé dans la pièce d'interconnexion articulée (9) étant un joint universel.
